# EUROPÄISCHE PATENTSCHRIFT

(11) **EP 2 359 970 B1**
(45) Veröffentlichungstag und Bekanntmachung des Hinweises auf die Patenterteilung: **09.01.2013**
(21) Anmeldenummer: 11150909.7
(22) Anmeldetag: 14.01.2011
(51) Int. Cl.: B23D 47/02, B27B 5/065, B23Q 9/00, F16C 13/00, F16C 29/04, F16C 29/12

(54) **Werkzeugwagen für eine Plattenbearbeitungsanlage.**
Tool carriage for a board processing assembly.
Chariot à outils pour une installation de traitement de plaques.

(30) Priorität: 11.02.2010 DE 102010008232
(43) Veröffentlichungstag der Anmeldung: 24.08.2011
(73) Patentinhaber: HOLZMA Plattenaufteiltechnik GmbH, 75365 Calw-Holzbronn (DE)
(72) Erfinder: Blaich, Markus, 75365 Calw-Stammheim (DE); Ziegler, Werner, 75365 Calw (DE); Nonnenmann, Georg, 75385 Zavelstein (DE)
(74) Vertreter: Dreiss

(56) Entgegenhaltungen:
- EP-A1- 1 980 763
- DE-B3-102007 021 211
- FR-A1- 2 527 965
- US-A- 2 082 798

## Beschreibung

Die Erfindung betrifft eine Plattenbearbeitungsanlage nach dem Oberbegriff des Anspruchs 1. Eine solche Anlage ist aus DE 10 2007 021 211 B bekannt.

Plattenbearbeitungsanlagen werden meist eingesetzt, um großformatige Platten, beispielsweise Holz- oder Kunststoffplatten für die Möbelindustrie, mittels eines Werkzeuges zu bearbeiten. Als Werkzeuge werden beispielsweise eine Kreissäge und/oder ein Fräsaggregat eingesetzt. Während des Bearbeitungsvorgangs ist das Werkstück meist stationär, wohingegen das Werkzeug mittels eines Werkzeugwagens relativ zum Werkstück bewegt wird. Bei dem Werkzeugwagen kann es sich beispielsweise um ein im Wesentlichen vertikal stehendes plattenförmiges Teil handeln, welches an seinem oberen Rand und an seinem unteren Rand mehrere Räder aufweist, wobei die oberen Räder mit einer oberen Schiene und die unteren Räder mit einer unteren Schiene zusammenarbeiten. Auf diese Weise ist der Werkzeugwagen zwischen den beiden Schienen verfahrbar gehalten.

Um einen Verschleiß sowohl an den Rädern als auch an den Schienen automatisch auszugleichen, wird in DE 10 2007 021 211 B3 eine federnde Halterung mindestens eines der Räder vorgeschlagen. Hierzu ist das Rad an einer Platte gehaltert, welche über eine gewisse Federelastizität in einer zur Schienenlängsrichtung orthogonalen Richtung verfügt. Die EP 1 980 763 A1 beschreibt eine komplexe Lagerung eines Schlittens einer Vorrichtung, mit der Spritzgussteile einer Form entnommen werden können. Die Räder des Schlittens sind exzentrisch gelagert. US 2,082,798 beschreibt eine Exzenterlagerung eines schwenkbaren Rads eines manuell bewegten Transportkarrens.

Aufgabe der vorliegenden Erfindung ist es, eine Plattenbearbeitungsanlage mit einem Werkzeugwagen der eingangs genannten Arten zu schaffen, welche ebenfalls ein automatisches Nachspannen des Rades gegen die Schiene und somit einen Ausgleich von Verschleiß etc. ermöglichen, ohne dass eine federelastische Platte erforderlich ist.

Diese Aufgabe wird durch eine Plattenbearbeitungsanlage mit den Merkmalen des Anspruchs 1 gelöst. Vorteilhafte Weiterbildungen sind in Unteransprüchen genannt. Darüber hinaus finden sich Merkmale, die sowohl in Alleinstellung als auch in unterschiedlichen Kombinationen für die Erfindung wichtig sein können, in der nachfolgenden Beschreibung und in der beiliegenden Zeichnung.

Erfindungsgemäß kann auf eine federelastische Platte vollständig verzichtet werden, da die translatorisch federnde Lagerung des drehbaren Radabschnitts relativ zum Basisteil des Werkzeugwagens durch einen in das Rad integrierten drehbeweglichen Federexzenter bereitgestellt wird. Die Federung des drehbaren Radabschnitts ist somit quasi in dessen Achse integriert, sodass das Rad äußerst kompakt baut und beispielsweise auch an bestehenden Plattenbearbeitungsanlagen nachgerüstet werden kann. Hierzu gehören insbesondere Plattenaufteilanlagen, welche als Werkzeug eine Säge aufweisen, bei denen der Werkzeugwagen also ein "Sägewagen" ist.

Ermöglicht wird all dies, da gemäß der vorliegenden Erfindung der Federhub des drehbaren Radabschnitts durch eine Rotation des wenigstens in begrenztem Umfange drehbeweglichen Federexzenters bereitgestellt wird. Beim Einfedern des Radabschnitts wird der Federexzenter gegen die Beaufschlagungsrichtung der Federeinrichtung verdreht, also gegen die Federkraft, wohingegen ein Ausfedern des drehbaren Radabschnitts bewirkt wird, indem die Federeinrichtung den Federexzenter in die andere Richtung bewegt.

Erfindungsgemäß wird vorgeschlagen, dass der Federexzenter einen Exzenterring umfasst, der zwischen Lagerabschnitt und Radabschnitt angeordnet ist. Auf diese Weise wird eine vor allem in axialer Richtung der Radachse gesehen kompakte Bauweise erreicht. Dies gilt insbesondere dann, wenn der Lagerabschnitt als radial innenliegende Lagerachse und der Radabschnitt als radial außenliegender Radreifen ausgebildet sind.

Um die Lager einerseits zwischen Lagerachse und Exzenterring und andererseits zwischen Radreifen und Exzenterring vor Verschmutzung zu schützen, ist eine Radkappe vorteilhaft, die am Radabschnitt befestigt ist.

Um die Montage zu vereinfachen, ist es vorteilhaft, wenn der Federexzenter mehrteilig mit dem Exzenterring und einem mit diesem starr verbundenen und vorzugsweise ringscheibenförmigen ersten Federlagerabschnitt ist, und wenn der Lagerabschnitt mehrteilig mit der Lagerachse und einem mit dieser starr verbundenen zweiten Federlagerabschnitt ist, wobei die Federeinrichtung zwischen dem ersten Federlagerabschnitt und dem zweiten Federlagerabschnitt verspannt ist.

Als Federeinrichtung kann beispielsweise eine Druckfeder zum Einsatz kommen, welche wenigstens in etwa in Umfangsrichtung des Lagerabschnitts oder des Federexzenters verläuft, und welche zwischen dem Lagerabschnitt und dem Federexzenter verspannt ist. Eine solche Druckfeder ist preiswert und robust.

Die Zuverlässigkeit und Präzision der bereitgestellten Federung des Rades wird verbessert, wenn die Radlagerung mindestens einen Anschlag umfasst, der eine Drehbewegung des Federexzenters begrenzt. Auch Montage und Lagerung eines solchen Rades werden vereinfacht, da eine übermäßige Entspannung der Federeinrichtung während Lagerung und Transport verhindert wird.

Eine besonders bevorzugte Ausgestaltung der Erfindung zeichnet sich dadurch aus, dass der Lagerabschnitt einen Befestigungsabschnitt zur mindestens mittelbaren Befestigung am Basisteil und einen Aufnahmeabschnitt zur Lagerung des Federexzenters umfasst, und dass der Aufnahmeabschnitt gegenüber dem Befestigungsabschnitt exzentrisch versetzt angeordnet ist und so einen Einstellexzenter bildet. Der Einstellexzenter und der Federexzenter sind somit in Reihe geschaltet. Durch den Einstellexzenter kann bei der Montage des Werkzeugwagens durch eine Drehung desselben die Anfangs-Relativstellung des drehbaren Radabschnitts zum Basisteil, letztlich also die Relativposition des Federexzenters zum Lagerabschnitt eingestellt werden. Damit wird sichergestellt, dass der zur Verfügung stehende Federweg - in beiden Richtungen, also sowohl für das Ausfedern als auch für das Einfedern des drehbaren Radabschnitts - in einem gewünschten Umfange zur Verfügung steht. Möglich ist beispielsweise eine Einstellung der Art, dass sich der Federexzenter in etwa in der Mitte zwischen zwei möglichen Endstellungen befindet, möglich ist aber auch, den Federexzenter durch eine Drehung des Einstellexzenters so einzustellen, dass der mögliche Federweg zu zwei Dritteln einem Ausfedern und nur zu einem Drittel einem Einfedern zur Verfügung gestellt wird.

Ebenfalls besonders vorteilhaft ist es, wenn die Radlagerung eine vorzugsweise optische Anzeigeeinrichtung umfasst, welche eine aktuelle Relativlage des Federexzenters relativ zum Lagerabschnitt anzeigt. Ganz allgemein kann eine solche Anzeigeeinrichtung dazu dienen, einen Verschleiß am drehbaren Radabschnitt und/oder an der dem Rad zugeordneten Schiene zu erkennen. In Verbindung mit dem Einstellexzenter dient eine solche Anzeigeeinrichtung aber vor allem zur Einstellung einer gewünschten Relativlage des Federexzenters zum Lagerabschnitt. Dabei kann die Anzeigeeinrichtung optisch arbeiten, was für die Montage und die zugehörige Einstellung des Einstellexzenters ausreicht, und was auch für eine Sichtkontrolle des Verschleißes beispielsweise bei einem Wartungstermin der Plattenbearbeitungsanlage ausreicht. Denkbar ist aber auch eine elektronische Erfassung der aktuellen Relativlage und eine Übermittlung entsprechender Signale an eine Steuer- und/oder Regeleinrichtung der Plattenbearbeitungsanlage. Diese kann den entsprechenden Wert dem Benutzer beispielsweise auf Anfrage auf einem Bildschirm anzeigen. Die erfasste Relativlage kann aber auch mit vorgegebenen Grenzwerten verglichen werden, sodass ein Hinweis an den Benutzer ausgegeben wird, wenn ein vorgegebener Grenzwert erreicht oder überschritten wird. Somit erhält der Benutzer einen Hinweis beispielsweise auf einen ein bestimmtes Ausmaß erreichenden Verschleiß, oder auch auf eine unzureichende Geradlinigkeit der Schiene.

Am einfachsten und somit am preiswertesten ist eine optische Anzeigeeinrichtung, welche eine mit dem Federexzenter verbundene erste optische Markierung, beispielsweise eine Kerbe, und eine mit dem Lagerabschnitt verbundene zweite Markierung, beispielsweise ebenfalls eine Kerbe, aufweist, welche bei einer Soll-Relativlage unmittelbar gegenüberliegen. Nachfolgend wird eine beispielhafte Ausführungsform unter Bezugnahme auf die beiliegende Zeichnung erläutert. In der Zeichnung zeigen:
- Figur 1: eine schematische Darstellung einer Plattenbearbeitungsanlage in Form einer Plattenaufteilsäge mit einem als Sägewagen ausgebildeten Werkzeugwagen;
- Figur 2: eine Ansicht von vorne des Sägewagens von Figur 1;
- Figur 3: eine Ansicht von vorne eines Rads des Sägewagens von Figur 2;
- Figur 4: einen Schnitt längs der Linie IV-IV von Figur 3;
- Figur 5: einen Schnitt längs der Linie V-V von Figur 3;
- Figuren 6 bis 8: eine perspektivische Darstellung des Rads der Figuren 3 bis 5 bei unterschiedlichen Einfederungen;
- Figur 9: eine perspektivische Ansicht von schräg hinten des Rads von Figur 7; und
- Figur 10: eine perspektivische Darstellung von schräg vorne des Rads der vorhergehenden Figuren mit einer montierten Radkappe.

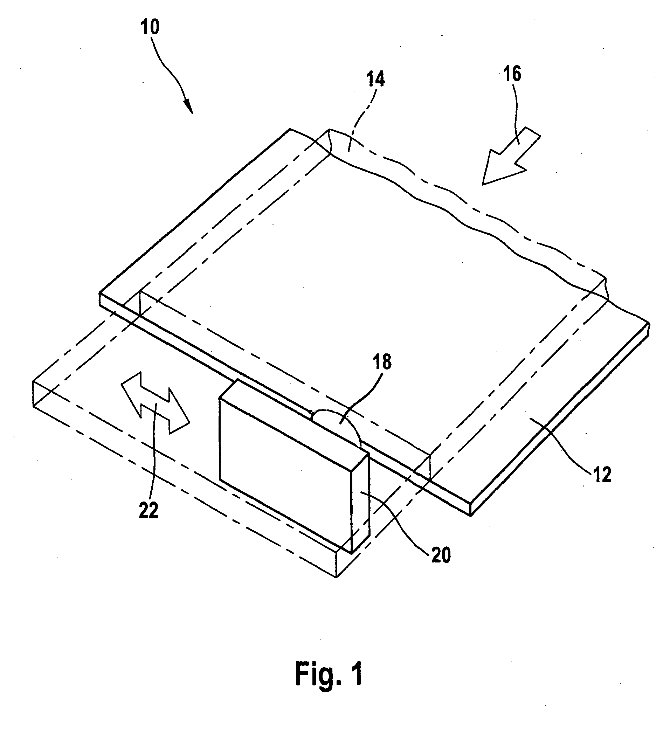

Eine Plattenbearbeitungsanlage trägt in Figur 1 insgesamt das Bezugszeichen 10. Sie umfasst einen Auflagetisch 12, auf dem ein Stapel 14 von großformatigen plattenförmigen Werkstücken in Vorschubrichtung 16 einem als Sägeblatt ausgebildeten Werkzeug 18 zugeführt werden kann. Die plattenförmigen Werkstücke werden beispielsweise bei der Herstellung von Möbelteilen verwendet und können sowohl aus Holz als auch aus Kunststoff sein.

Das Sägeblatt 18 ist an einem, insoweit als Sägewagen ausgebildeten Werkzeugwagen 20 drehbar befestigt. Der Sägewagen 20 kann in einer Richtung 22 quer zur Vorschubrichtung 16 bewegt werden. Durch diese Bewegung wird der eigentliche Sägeschnitt am währenddessen stationären Stapel 14 der plattenförmigen Werkstücke ausgeführt.

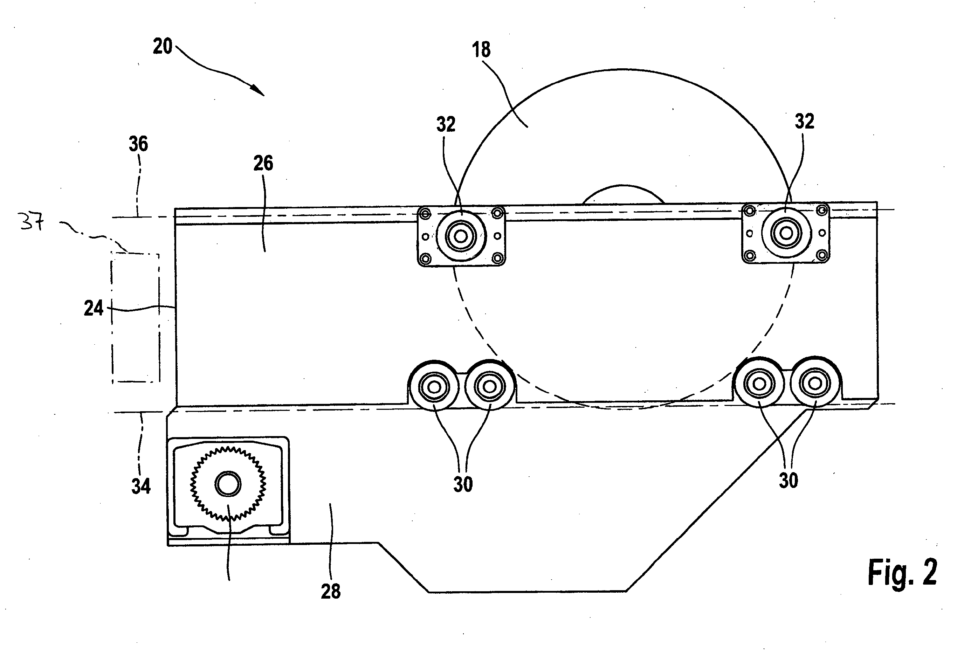

Der grundlegende Aufbau des Sägewagens 20 ist aus Figur 2 ersichtlich: Danach umfasst der Sägewagen 20 ein Basisteil 24, welches insgesamt plattenförmige Gestalt aufweist, aber beispielsweise eine Blechkonstruktion sein kann, um Gewicht zu sparen. Ein in Figur 2 und auch in Einbaulage oberer Führungsbereich 26 des Basisteils 24 weist eine größere Dicke auf als ein Restbereich 28. Am unteren Rand des Führungsbereichs 26 sind jeweils zwei Paare von unteren Rädern 30 angeordnet, die eine in Einbaulage horizontale Drehachse aufweisen. Am oberen Rand des Führungsbereichs 26 sind, horizontal voneinander beabstandet, zwei Räder 32 angeordnet. Die beiden Paare der unteren Räder 30 und die beiden oberen Räder 32 sind dabei jeweils symmetrisch zu einer Ebene angeordnet, in der eine Drehachse (nicht gezeigt) des Sägeblatts 18 liegt. In Einbaulage arbeiten die unteren Räder 30 mit einer unteren Laufschiene 34 zusammen, und die oberen Räder 32 arbeiten mit einer oberen Laufschiene 36 zusammen. Die Laufschienen 34 und 36 sind in Figur 2 nur strichpunktiert angedeutet und liegen in einer vertikalen Führungsebene 37.

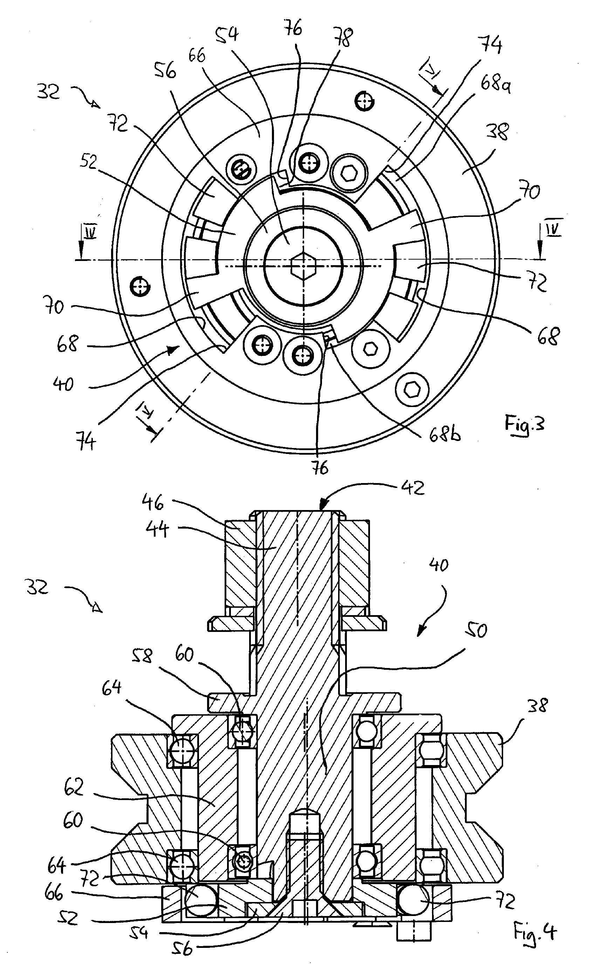

Während die unteren Räder 30 in vertikaler Richtung starr mit dem Basisteil 24 verbunden sind, weisen die beiden oberen Räder 32 jeweils eine elastisch federnde Radlagerung auf, welche eine translatorische Bewegung der oberen Räder 32 in einer zur oberen Laufschiene 36 orthogonalen Richtung in der Führungsebene 37 gestattet. Der Aufbau dieser federnden Radlagerung wird nun unter Bezugnahme auf die Figuren 3 bis 5 im Detail erläutert:

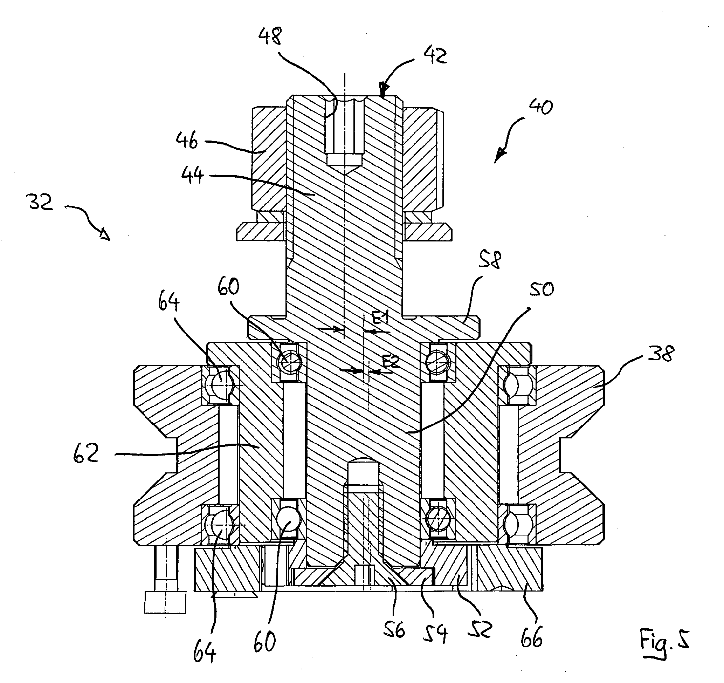

Das Rad 32 weist einen drehbaren Radabschnitt auf, der als radial außenliegender Radreifen 38 ausgebildet ist. Der Radreifen 38 ist auf einer Radlagerung gelagert, die insgesamt mit dem Bezugszeichen 40 bezeichnet ist. Die Radlagerung 40 weist einen Lagerabschnitt 42 auf, der insgesamt die Form eines Lagerbolzens hat. Der Lagerabschnitt 42 weist einen Befestigungsabschnitt 44 auf, der über eine Befestigungsmutter 46 am Basisteil 24 drehstarr befestigt werden kann. Im abragenden Ende des Befestigungsabschnitts 44 ist eine nur in Figur 5 gezeichnete Sechskantausnehmung 48 vorhanden, auf deren Bedeutung weiter unter noch eingegangen werden wird.

An den Befestigungsabschnitt 44 des Lagerabschnitts 42 schließt sich ein Aufnahmeabschnitt 50 an, der, wie aus Figur 5 ersichtlich ist, gegenüber dem Befestigungsabschnitt 44 versetzt angeordnet ist. Diese Exzentrizität ist in Figur 5 mit E1 bezeichnet. Auf das abragende Ende des Aufnahmeabschnitts 50 ist ein im weitesten Sinne ringscheibenförmiger Federlagerabschnitt 52 aufgeschoben und über eine Ringscheibe 54 und eine Schraube 56 am Lagerabschnitt 42 axial gesichert. Zwischen dem Federlagerabschnitt 52 und einem sich zwischen Aufnahmeabschnitt 50 und Befestigungsabschnitt 44 radial erstreckenden Bund 58 des Lagerabschnitts 42 sind die beiden radial inneren Lagerringe (ohne Bezugszeichen) zweier Kugellager 60 axial gehalten. Die äußeren Lagerringe (ohne Bezugszeichen) dieser beiden Kugellager 60 halten einen Exzenterring 62. Dessen Exzentrizität ist in Figur 5 mit E2 bezeichnet. Seine äußere Umfangsfläche ist wiederum mit inneren Lagerringen zweier Kugellager 64 verbunden, deren äußere Lagerringe wiederum den Radreifen 38 tragen. Der Exzenterring 62 ist also zwischen dem Lagerabschnitt 42 und dem den drehbaren Radabschnitt bildenden Radreifen 38 angeordnet. Der Lagerabschnitt 42 bildet dabei eine radial innen liegende Lagerachse für den Exzenterring 62 und mindestens mittelbar auch für den Radreifen 38.

Stirnseitig ist an dem Exzenterring 62 ein ringscheibenförmiger Federlagerabschnitt 66 befestigt, beispielsweise mittels Schrauben (ohne Bezugszeichen). Dieser äußere "erste" Federlagerabschnitt 66 ist koaxial zu dem zweiten Federlagerabschnitt 52 und axial auf gleicher Höhe wie der zweite Federlagerabschnitt 52 angeordnet, der zweite Federlagerabschnitt 52 ist also radial innerhalb des ersten Federlagerabschnitts 66 angeordnet. Hierzu weist der erste Federlagerabschnitt 66 in seiner radial inneren Begrenzungsfläche zwei einander gegenüberliegende Ausnehmungen 68 auf, die sich in einem radial äußeren Abschnitt über einen Winkelbereich von ungefähr 90° und in einem radial inneren Abschnitt über einen Winkelbereich von ungefähr 130° erstrecken. Der radial äußere Bereich ist in Figur 3 mit 68a, der radial innere Bereich mit 68b bezeichnet.

In den radial äußeren Bereich 68a erstrecken sich zwei radial abragende Flügel 70 des zweiten Federlagerabschnitts 52. Zwischen einem Flügel 70 und dem seitlichen Ende des Abschnitts 68a einer Ausnehmung 68 ist eine sich in etwa in Umfangsrichtung erstreckende Druckfeder 72 verspannt. Das andere seitliche Ende des radial äußeren Abschnitts 68a einer Ausnehmung 68 bildet einen ersten Anschlag 74 für den entsprechenden Flügel 70, der in radialer Richtung gesehen gegenüberliegende seitliche Rand des inneren Abschnitts 68b einer Ausnehmung 68 bildet einen zweiten Anschlag 76 für eine entsprechende Kante 78 am zweiten Federlagerabschnitt 52. Auf diese Weise ist eine Drehbewegung des mit dem Exzenterring 62 starr gekoppelten ersten Federlagerabschnitts 66 relativ zu dem mit dem Lagerabschnitt 42 starr gekoppelten zweiten Federlagerabschnitt 52 auf einen Winkelbereich von ungefähr 35° beschränkt.

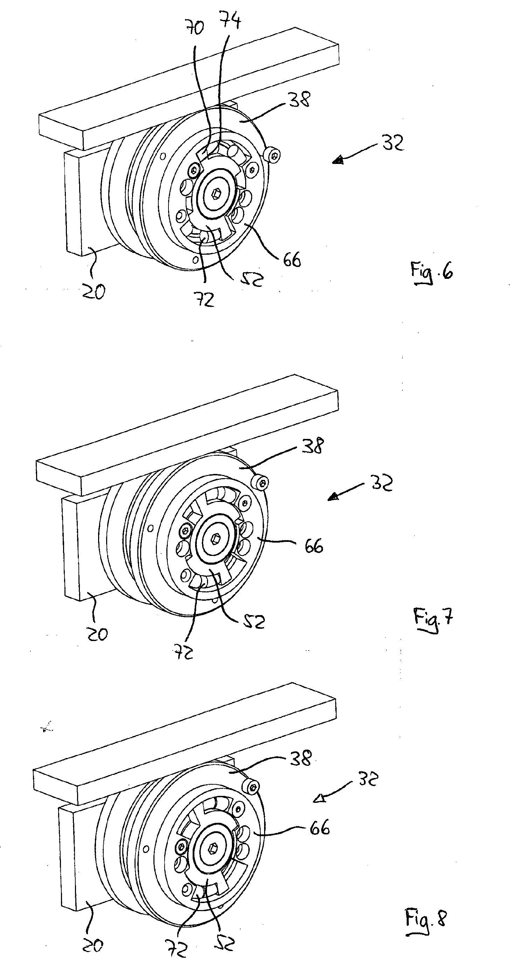

Nach dem Zusammenbau des Rads 32, jedoch noch vor der Montage des Sägewagens 20 an den beiden Laufschienen 34 und 36 ist die Radlagerung 40 vollständig "ausgefedert", entsprechend dem in Figur 6 gezeigten Zustand, an dem die Flügel 70 an den ersten Anschlägen 74 anliegen. Nach dem Einsetzen des Sägewagens 20 mit den unteren Rädern 30 in die untere Laufschiene 34 wird der Sägewagen 20 so positioniert, dass die oberen Räder 32 unmittelbar unterhalb der oberen Laufschiene 36 angeordnet sind. Die Winkelstellung des Lagerabschnitts 42 ist zunächst der Gestalt, dass der Aufnahmeabschnitt 50 von der oberen Laufschiene 36 des Rads 32 maximal beabstandet ist. Nun wird ein Inbusschlüssel in die Sechskantausnehmung 48 eingeführt und durch Drehen des Lagerabschnitts 42 der Aufnahmeabschnitt 50 zur oberen Laufschiene 36 hin bewegt. Hierdurch wird der Radreifen 38 gegen die Laufschiene 36 gedrückt, und in der Folge wird der Exzenterring 62 mit dem ersten Federlagerabschnitt 66 gegen die Kraft der beiden Druckfedern 72 verdreht, wodurch die Exzentrizität E1 der Drehachse des Radreifens 38 gegenüber dem Aufnahmeabschnitt 50 verringert wird.

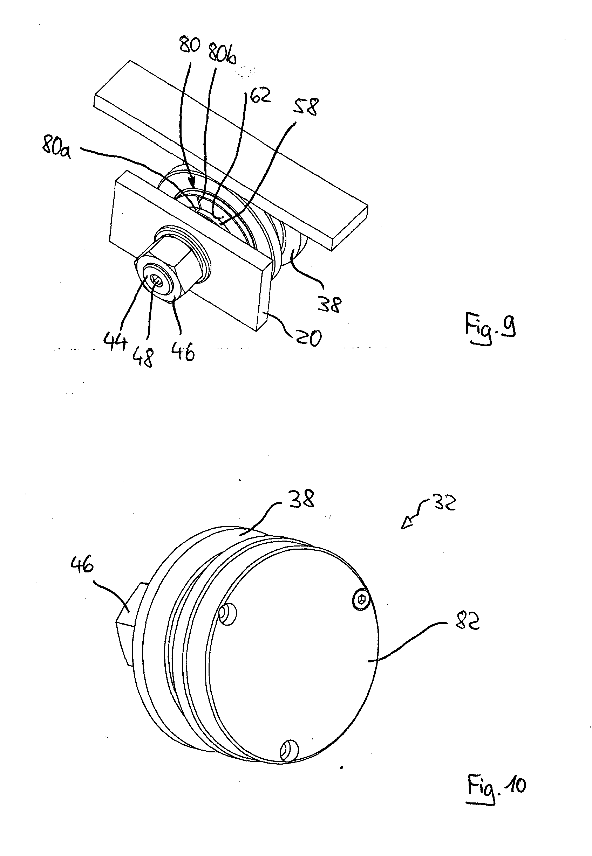

Die relative Winkelstellung des Exzenterrings 62 gegenüber dem Aufnahmeabschnitt 50 kann der Benutzer während der Justierung mittels einer optischen Anzeigeeinrichtung 80 erkennen. Diese umfasst, wie aus den Figuren 4 und 9 ersichtlich ist, eine kerbenartige Markierung 80a auf der radial äußeren Mantelfläche des Bunds 58, und eine kerbenartige Markierung 80b auf der benachbarten Stirnfläche (ohne Bezugszeichen) des Exzenterrings 62. Die beiden Markierungen 80a und 80b sind so angeordnet, dass sie, wie in Figur 9 gezeigt, einander unmittelbar gegenüberliegen, also miteinander fluchten, wenn der Abstand einerseits zwischen dem zweiten Federlagerabschnitt 52 und dem ersten Anschlag 74 und andererseits zwischen dem zweiten Federlagerabschnitt 52 und dem zweiten Anschlag 76 dergestalt ist, dass der mögliche Federweg zu zwei Dritteln einem Ausfedern und nur zu einem Drittel einem Einfedern zur Verfügung gestellt wird. Damit steht für das Ausfedern in etwa doppelt so viel Federweg zur Verfügung wie für das Einfedern. Ist der Lagerabschnitt 42 in der gewünschten Weise ausgerichtet, wird die Befestigungsmutter 46 angezogen und hierdurch der Lagerabschnitt 42 starr mit dem Basisteil 24 verbunden.

Kommt es nun im Betrieb zu einem Verschleiß an der Lauffläche (ohne Bezugszeichen) des Radreifens 38 und/oder an der oberen Laufschiene 36, federt der Radreifen 38 aufgrund der Beaufschlagung des Exzenterrings 62 durch die beiden Druckfedern 72 zur Laufschiene 36 hin aus, wodurch sichergestellt bleibt, dass der Radreifen 38 mit der Laufschiene 36 immer vollen Kontakt hat, der Sägewagen 20 also immer sicher und präzise gehalten und geführt ist. Die maximal ausgefederte Stellung zeigt Figur 6, die maximal eingefederte Stellung, beispielsweise bei einer Unlinearität der Laufschiene 36, zeigt Figur 8.

Um den in den Figuren 6 bis 8 sichtbaren Bereich des Rads 32 vor Verschmutzung zu schützen, ist am Radreifen 38 eine Radkappe 82 befestigt, wie aus Figur 10 ersichtlich ist.

## Patentansprüche

1. Plattenbearbeitungsanlage (10) mit einem Werkzeugwagen (20), der ein ein Bearbeitungswerkzeug tragendes Basisteil (24) mit mindestens einem Rad (30; 32) zur Lagerung des Basisteils (24) an einer Schiene (34; 36) aufweist, wobei das Rad (32) eine Radlagerung (40) zur wenigstens mittelbaren Befestigung am Basisteil (24) aufweist, welche Radlagerung (40) im Betrieb eine translatorische Relativbewegung zwischen Rad (32) und Basisteil (24) erlaubt, **dadurch gekennzeichnet, dass** die Radlagerung (40) einen im Betrieb gegenüber dem Basisteil (24) drehfesten Lagerabschnitt (42) und einen von einer Federeinrichtung in Umfangsrichtung beaufschlagten und gegenüber dem Lagerabschnitt (42) im Betrieb wenigstens in begrenztem Umfang drehbeweglichen Federexzenter umfasst, an dem ein drehbarer Radabschnitt mindestens mittelbar gelagert ist, und dass der Federexzenter einen Exzenterring (62) umfasst, der zwischen Lagerabschnitt (42) und Radabschnitt angeordnet ist.

2. Plattenbearbeitungsanlage (10) nach Anspruch 1, **dadurch gekennzeichnet, dass** der Lagerabschnitt (42) als radial innen liegende Lagerachse und der Radabschnitt als radial außen liegender Radreifen (38) ausgebildet sind.

3. Plattenbearbeitungsanlage (10) nach Anspruch 2, **dadurch gekennzeichnet, dass** der Radabschnitt eine Radkappe (82) aufweist.

4. Plattenbearbeitungsanlage (10) nach einem der vorhergehenden Ansprüche, **dadurch gekennzeichnet, dass** der Federexzenter mehrteilig mit dem Exzenterring (62) und einem mit diesem starr verbundenen und vorzugsweise ringscheibenförmigen ersten Federlagerabschnitt (52) ist, und dass der Lagerabschnitt (42) mehrteilig mit der Lagerachse und einem mit dieser starr verbundenen zweiten Federlagerabschnitt (52) ist, und dass die Federeinrichtung zwischen dem ersten und dem zweiten Federlagerabschnitt (52) verspannt ist.

5. Plattenbearbeitungsanlage (10) nach einem der vorhergehenden Ansprüche, **dadurch gekennzeichnet, dass** die Federeinrichtung mindestens eine Druckfeder (72) umfasst, welche wenigstens in etwa in Umfangsrichtung verläuft und zwischen dem Lagerabschnitt (42) und dem Federexzenter verspannt ist.

6. Plattenbearbeitungsanlage (10) nach einem der vorhergehenden Ansprüche, **dadurch gekennzeichnet, dass** die Radlagerung (40) mindestens einen Anschlag umfasst, der eine Drehbewegung des Federexzenters begrenzt.

7. Plattenbearbeitungsanlage (10) nach einem der vorhergehenden Ansprüche, **dadurch gekennzeichnet, dass** der Lagerabschnitt (42) einen Befestigungsabschnitt (44) zur mindestens mittelbaren Befestigung am Basisteil (24) und einen Aufnahmeabschnitt (50) zur Lagerung des Federexzenters umfasst, und dass der Aufnahmeabschnitt (50) gegenüber dem Befestigungsabschnitt (44) exzentrisch versetzt angeordnet ist, so dass der Lagerabschnitt (42) einen Einstellexzenter bildet.

8. Plattenbearbeitungsanlage (10) nach einem der vorhergehenden Ansprüche, **dadurch gekennzeichnet, dass** die Radlagerung (40) eine vorzugsweise optische Anzeigeeinrichtung (80) umfasst, welche eine aktuelle Relativlage des Federexzenters relativ zum Lagerabschnitt (42) anzeigt.

9. Plattenbearbeitungsanlage (10) nach Anspruch 8, **dadurch gekennzeichnet, dass** die optische Anzeigeeinrichtung (80) eine mit dem Federexzenter verbundene erste Markierung und eine mit dem Lagerabschnitt (42) verbundene zweite Markierung aufweist, welche bei einer Soll-Relativlage unmittelbar gegenüber liegen.

## Claims

1. A board processing assembly (10) having a tool carriage (20) that has a base part (24), which supports a processing tool and which has at least one wheel (30; 32) for supporting the base part (24) on a rail (34; 36), whereby the wheel (32) has a wheel bearing (40) for at least indirectly attaching it to the base part (24), the wheel bearing (40) permitting a translatory relative motion between the wheel (32) and the base part (24) during operation, wherein the wheel bearing (40) includes a bearing segment (42), which during operation is rotationally fixed with respect to the base part (24), and a spring-action eccentric cam, which is acted upon by a spring device in the circumferential direction, which during operation can rotate at least to a limited degree with respect to the bearing segment (42), and on which a rotatable wheel segment is supported at least indirectly, and the spring-action eccentric cam includes an eccentric ring (62), which is arranged between the bearing segment (42) and the wheel segment.

2. The board processing assembly (10) as recited in Claim 1, wherein the bearing segment (42) is configured as a bearing axle that is situated immediately to the interior, and the wheel segment is configured as a tire (38) that is situated radially to the exterior.

3. The board processing assembly (10) as recited in Claim 2, wherein the wheel segment has a wheel cover (82).

4. The board processing assembly (10) as recited in any of the preceding claims, wherein the spring-action eccentric cam has multiple parts including the eccentric ring (62) and a first spring bearing segment (52) that is fixedly connected to the eccentric ring and is preferably shaped like an annular disk, and the bearing segment (42) has multiple parts including the bearing axle and a second spring bearing segment (52) that is fixedly connected to said bearing axle, and the spring device is held with tension between the first and the second spring bearing segment (52).

5. The board processing assembly (10) as recited in any of the preceding claims, wherein the spring device includes at least one pressure spring (72) which runs at least roughly in the circumferential direction and is held with tension between the bearing segment (42) and the spring-action eccentric cam.

6. The board processing assembly (10) as recited in any of the preceding claims, wherein the wheel bearing (40) includes a limit stop, which limits the rotational motion of the spring-action eccentric cam.

7. The board processing assembly (10) as recited in any of the preceding claims, wherein the bearing segment (42) includes an attachment segment (44) for at least indirectly attaching to the base part (24) and a receiving segment (50) for supporting the spring-action eccentric cam, and the receiving segment (50) is arranged so that it is eccentrically offset with respect to the attachment segment (44) so that the bearing segment (42) forms an adjusting eccentric cam.

8. The board processing assembly (10) as recited in any of the preceding claims, wherein the wheel bearing (40) includes a preferably optical display device (80), which displays the current relative position of the spring-action eccentric cam relative to the bearing segment (42).

9. The board processing assembly (10) as recited in Claim 8, wherein the optical display device (80) has a first marking that is associated with the spring-action eccentric cam and a second marking that is associated with the bearing segment (42), said markings being situated directly opposite each other when in a nominal relative position.

## Revendications

1. Installation de traitement de plaques (10) dotée d'un chariot à outils (20) comprenant une partie de base (24) portant un outil de traitement et dotée d'au moins une roue (30; 32) destinée à supporter la partie de base (24) sur un rail (34; 36), la roue (32) comprenant un système de support de roue (40) destiné à être fixé au moins indirectement sur la partie de base (24), ledit système de support de roue (40) permettant durant l'utilisation un déplacement relatif en translation entre la roue (32) et la partie de base (24), **caractérisée en ce que** le système de support de roue (40) comprend une partie de palier (42) solidaire en rotation par rapport à la partie de base (24) durant l'utilisation et un excentrique à ressort soumis à l'effet d'un dispositif à ressort dans la direction circonférentielle et mobile en rotation par rapport à la partie de palier (42) durant l'utilisation au moins dans une circonférence délimitée, une partie rotative de roue étant montée au moins indirectement sur ledit excentrique à ressort, et **en ce que** l'excentrique à ressort comprend une bague excentrique (62) disposée entre la partie de palier (42) et la partie de roue.

2. Installation de traitement de plaques (10) selon la revendication 1, **caractérisée en ce que** la partie de palier (42) est conçue comme un essieu de palier situé radialement à l'intérieur et la partie de roue est conçue comme un pneu de roue (38) situé radialement à l'extérieur.

3. Installation de traitement de plaques (10) selon la revendication 2, **caractérisée en ce que** la partie de roue comprend un enjoliveur (82).

4. Installation de traitement de plaques (10) selon l'une quelconque des revendications précédentes, **caractérisée en ce que** l'excentrique à ressort est composé de la bague excentrique (62) et d'une première partie de bride de ressort formant palier (52) reliée rigidement à celle-ci et de préférence en forme de disque annulaire, et **en ce que** la partie de palier (42) est composée de l'axe de palier et d'une seconde partie de bride de ressort formant palier (52) reliée rigidement à celle-ci, et **en ce que** le dispositif à ressorts est précontraint entre la première et la seconde partie de bride de ressort formant palier (52).

5. Installation de traitement de plaques (10) selon l'une quelconque des revendications précédentes, **caractérisée en ce que** le dispositif à ressorts comprend au moins un ressort de pression (72) s'étendant au moins à peu près dans la direction circonférentielle et précontraint entre la partie de palier (42) et l'excentrique à ressort.

6. Installation de traitement de plaques (10) selon l'une quelconque des revendications précédentes, **caractérisée en ce que** le système de support de roue (40) comprend au moins une butée limitant un déplacement rotatif de l'excentrique à ressort.

7. Installation de traitement de plaques (10) selon l'une quelconque des revendications précédentes, **caractérisée en ce que** la partie de palier (42) comprend une partie de fixation (44) destinée à la fixation au moins indirecte sur la partie de base (24) et une partie de logement (50) destinée à supporter l'excentrique à ressort, et **en ce que** la partie de logement (50) est décalée de manière excentrée par rapport à la partie de fixation (44), de sorte que la partie de palier (42) forme un excentrique de réglage.

8. Installation de traitement de plaques (10) selon l'une quelconque des revendications précédentes, **caractérisée en ce que** le système de support de roue (40) comprend un dispositif d'affichage (80) de préférence optique affichant une position relative actuelle de l'excentrique à ressort par rapport à la partie de palier (42).

9. Installation de traitement de plaques (10) selon la revendication 8, **caractérisée en ce que** le dispositif d'affichage optique (80) comprend une première marque reliée à l'excentrique à ressort et une seconde marque reliée à la partie de palier (42), lesquelles sont directement opposées l'une à l'autre lorsqu'elles occupent une position relative théorique.
